# EUROPEAN PATENT APPLICATION

(11) **EP 3 633 582 A1**
(43) Date of publication of application: **08.04.2020**
(21) Application number: 18806121.2
(22) Date of filing: 15.02.2018
(51) Int. Cl.: G06Q 30/06, G06F 16/00

(54) **INFORMATION PROCESSING DEVICE, INFORMATION PROCESSING METHOD, AND PROGRAM**

(30) Priority: 24.05.2017 JP 2017102516
(71) Applicant: Sony Corporation, Tokyo 108-0075 (JP)
(72) Inventor: KIRIHARA, Reiko, Tokyo 108-0075 (JP); MIYAZAKI, Mitsuhiro, Tokyo 108-0075 (JP); SAITO, Mari, Tokyo 108-0075 (JP); YAEDA, Juri, Tokyo 108-0075 (JP)
(74) Representative: MFG Patentanwälte Meyer-Wildhagen Meggle-Freund Gerhard PartG mbB
(86) International application number: PCT/JP2018/005322
(87) International publication number: WO 2018/216271

(57) **Abstract**

[Overview]

[Problem to be Solved] To provide an information processing device, an information processing method, and a program that make it possible to present recommendatory information for a plurality of users when a decider exists, and to raise a decision rate.

[Solution] An information processing device including a control unit that performs control to present recommendatory information of a recommendation item whose decider exists in a surrounding area among recommendation items of information to be recommended to a group to which one or more identified users who exist in the surrounding area belong.

## Description

### Technical Field

The present disclosure relates to an information processing device, an information processing method, and a program.

### Background Art

A technology of performing information recommendation on the basis of preferences and constraints of an individual user has been conventionally known.

Here, concerning an information recommendation technology, for example, PTL 1 given below discloses that, as user preference information to be used in performing recommendation, information having a possibility of implicitly indicating a user preference is used by converting the information into information explicitly indicating the user preference.

### Citation List

### Patent Literature

PTL 1: Japanese Unexamined Patent Application Publication No. 2015-35140 Summary of the Invention

### Problems to be Solved by the Invention

However, if the conventional technologies deliver a proposal to match a preference of each individual person in proposing contents that a plurality of persons takes part in, such as, for example, "a dinner and a pleasure trip as a family, and viewing and listening content shared by a family", the proposal only matches a preference of a specific person among participants, but does not necessarily match preferences of the other participants.

Further, "time and effort (cooking and driving) and costs (food expense and travel expense)" that are involved in a dinner, a pleasure trip, and the like cause some of participants to be unequally appointed as decision-making persons in many cases. There are cases where no decision is reached even if a proposal is delivered when such a decision-making person does not exist.

Accordingly, the present disclosure proposes an information processing device, an information processing method, and a program that make it possible to present recommendatory information for a plurality of users when a decider exists, and to raise a decision rate.

### Means for Solving the Problems

According to the present disclosure, there is proposed an information processing device including a control unit that performs control to present recommendatory information of a recommendation item whose decider exists in a surrounding area among recommendation items of information to be recommended to a group to which one or more identified users who exist in the surrounding area belong.

According to the present disclosure, there is proposed an information processing method including performing, by a processor, control to present recommendatory information of a recommendation item whose decider exists in a surrounding area among recommendation items of information to be recommended to a group to which one or more identified users who exist in the surrounding area belong.

According to the present disclosure, there is proposed a program for causing a computer to function as a control unit that performs control to present recommendatory information of a recommendation item whose decider exists in a surrounding area among recommendation items of information to be recommended to a group to which one or more identified users who exist in the surrounding area belong.

### Effects of the Invention

As described above, according to the present disclosure, it is possible to present recommendatory information for a plurality of users when a decider exists, and to raise a decision rate.

It is to be noted that the above-described effects are not necessarily limitative. Any of the effects indicated in this description or other effects that may be understood from this description may be attained in addition to the above-described effects or in place of the above-described effects.

### Brief Description of Drawing

[FIG. 1] FIG. 1 is a diagram describing an overview of an information processing system according to an embodiment of the present disclosure.
[FIG. 2] FIG. 2 is a block diagram illustrating an example of a configuration of a terminal device according to the present embodiment.
[FIG. 3] FIG. 3 is a block diagram illustrating an example of a configuration of a server according to the present embodiment.
[FIG. 4] FIG. 4 is a flowchart illustrating information presentation processing according to a first working example.
[FIG. 5] FIG. 5 is an example of priority of each of recommendation items according to a combination of (persons who exist) in a group according to the first working example.
[FIG. 6] FIG. 6 is a diagram illustrating an example of a management table of likelihood of a decider according to the first working example.
[FIG. 7] FIG. 7 is a flowchart illustrating information presentation processing according to a second working example.
[FIG. 8] FIG. 8 is a diagram illustrating an example of a dialogue sequence according to the second working example.

### Modes for Carrying Out the Invention

The following describes a preferred embodiment of the present disclosure in detail with reference to the accompanying drawings. It is to be noted that, in this description and the accompanying drawings, constituent elements that have substantially the same functional configuration are indicated by the same reference signs, and thus redundant description thereof is omitted.

In addition, the description is made in the following order.
1. Overview of Information Processing System according to Embodiment of the Present Disclosure
2. Configurations
   2-1. Configuration of Terminal Device
   2-2. Configuration of Server
3. Respective Working Examples
   3-1. First Working Example
   3-2. Second Working Example
4. Conclusion

### <<1. Overview of Information Processing System according to Embodiment of the Present Disclosure>>

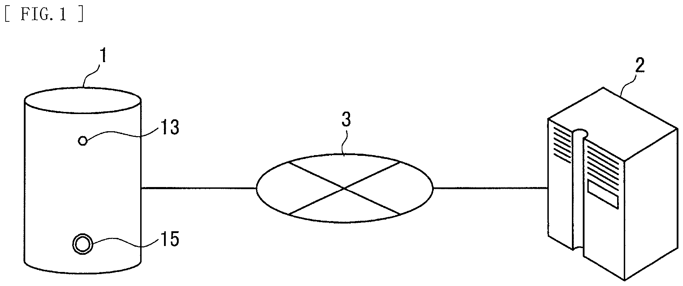

FIG. 1 is a diagram describing the overview of an information processing system according to an embodiment of the present disclosure. As illustrated in FIG. 1, the information processing system according to the present embodiment includes a terminal device 1 that allows for voice-based information presentation, and a server 2. The terminal device 1 and the server 2 are coupled to each other through a network 3.

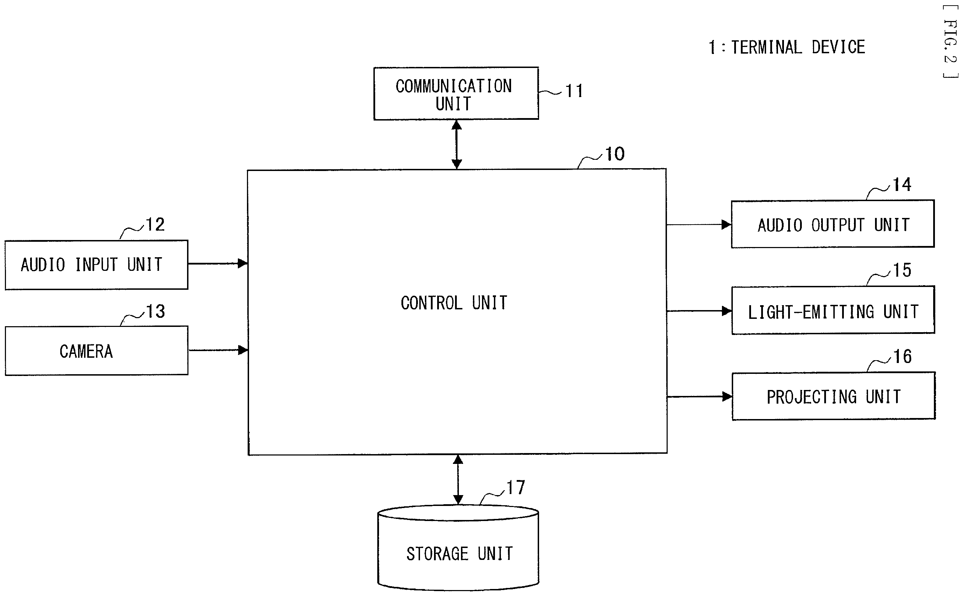

The terminal device 1 according to the present embodiment has an agent function that achieves speech dialogue with a user. Specifically, the terminal device 1 includes an audio input unit 12 (see FIG. 2) and an audio output unit 14 (see FIG. 2) to allow for sound collection of a user speech and output of an agent voice. For example, in a case where the terminal device 1 receives a question concerning tomorrow's weather from a user, the terminal device 1 accesses a weather information service through the network 3, and acquires tomorrow's weather information, thereby allowing for voice-based presentation.

Additionally, the terminal device 1 may further include one or more cameras 13 and a light-emitting unit 15, as illustrated in FIG. 1.

It is to be noted that a form of the terminal device 1 is not particularly limited. For example, the terminal device 1 may be a stationary home agent device, or may be a self-propelled home agent device (for example, a robot). Further, the terminal device 1 may be a mobile terminal such as a smartphone, a tablet terminal, a mobile phone terminal, or a wearable terminal, or may be a device such as a personal computer, a game console, or a music player.

The server 2 may perform analysis of a speaking voice that is collected by the terminal device 1, and decision of recommendation contents (that is, retrieval and generation of presentation information).

It is to be noted that, in the present embodiment, the configuration of a client-server system is adopted as illustrated in FIG. 1 as an example, but the present disclosure is not limited thereto. The entire processing may be performed on the client side, or the processing may be distributed further using an external device.

Here, as described above, if the conventional technologies deliver a proposal to match a preference of each individual person in proposing contents that a plurality of persons takes part in, the proposal only matches a preference of a specific person among participants, but does not necessarily match preferences of the other participants. Further, further, "time and effort (cooking and driving) and costs (food expense and travel expense)" that are involved in a dinner, a pleasure trip, and the like cause some of participants to be unequally appointed as decision-making persons in many cases. There have been cases where no decision is reached even if a proposal is delivered when such a decision-making person does not exist.

Accordingly, the present disclosure makes it possible to present recommendatory information for a plurality of users when a decider exists, and to raise a decision rate.

More specifically, controlling presentation contents and timing of presenting information in accordance with a "combination of group members" and the "existence/nonexistence of a decider" makes it possible to further improve the convenience of a recommendation system and to raise a decision rate of proposed contents.

The information processing system according to the embodiment of the present disclosure has been described above. Next, the specific configuration of each device included in the information processing system according to the present embodiment is described with reference to the drawings.

### <<2. Configurations>>

### <2-1. Configuration of Terminal Device 1>

FIG. 2 is a block diagram illustrating an example of the configuration of the terminal device 1 according to the present embodiment. As illustrated in FIG. 2, the terminal device 1 (an example of the information processing device) includes a control unit 10, a communication unit 11, the audio input unit 12, the camera 13, the audio output unit 14, the light-emitting unit 15, a projecting unit 16, and a storage unit 17.

The control unit 10 functions as an arithmetic processing device and a control device, and controls the overall operation of the terminal device 1 in accordance with a variety of programs. The control unit 10 is achieved, for example, with the use of an electronic circuit such as CPU (Central Processing Unit) or a microprocessor. Further, the control unit 10 may include ROM (Read Only Memory) that stores a program, an operation parameter, and the like to be used, and RAM (Random Access Memory) that temporarily stores a parameter and the like varying as appropriate.

Further, the control unit 10 according to the present embodiment performs control to transmit an audio signal (for example, a user's speaking voice) that is outputted from the audio input unit 12, and a captured image (for example, a user face image) that is taken by the camera 13 to the server 2 through the communication unit 11. The format of data to be transmitted is not particularly limited, but the original data may be transmitted, or data processed as appropriate may be transmitted. Examples of the processing include compression, extraction of a feature amount, modification into another format, and the like.

Additionally, the control unit 10 presents an agent voice (for example, response information for a user speech) that is transmitted from the server 2 to cause the agent voice to be outputted from the audio output unit 14. Further, the control unit 10 is able to perform control to project image information transmitted from the server 2 from the projecting unit 16.

### (Communication Unit 11)

The communication unit 11 couples to the network 3 in a wired or wireless manner, and transmits and receives data to and from the server 2 on the network. The communication unit 11 establishes communication coupling to the network 3, for example, in accordance with wired/wireless LAN (Local Area Network), Wi-Fi (registered trademark), a mobile communication network (LTE (Long Term Evolution) or 3G (third generation mobile communication systems)), or the like.

### (Audio Input Unit 12)

The audio input unit 12 picks up a user voice and a surrounding environmental sound to output an audio signal to the control unit 10. Specifically, the audio input unit 12 is achieved with the use of a microphone, an amplifier, and the like. Further, the audio input unit 12 may be achieved with the use of a microphone array including a plurality of the microphones.

### (Camera 13)

The camera 13 includes a lens system including an imaging lens, a diaphragm, a zoom lens, a focus lens, and the like, a driving system that causes the lens system to perform a focus operation and a zoom operation, a solid-state imaging element array that generates an imaging signal from photoelectric conversion of imaging light obtained in the lens system, and the like. The solid-state imaging element array may be achieved, for example, with the use of a CCD (Charge Coupled Device) sensor array and a CMOS (Complementary Metal Oxide Semiconductor) sensor array.

### (Audio Output Unit 14)

The audio output unit 14 includes a speaker that reproduces an audio signal, and an amplifier circuit for the speaker.

### (Light-Emitting Unit 15)

The light-emitting unit 15 has a structure of generating light with the use of LED (Light-Emitting Diode) and the like. The light-emitting unit 15 may be, for example, turned on and off, and blink in accordance with the control of the control unit 10. Further, it is also possible to adjust a color and luminance of light of the light-emitting unit 15 when the light-emitting unit 15 is on. A lighting state of the light-emitting unit 15 makes it possible to notify the surroundings, for example, that the terminal device 1 is in a standby state, or is powered off.

### (Projecting Unit 16)

The projecting unit 16 has a function of projecting images onto a wall, a ceiling, a screen, and the like.

### (Storage Unit 17)

The storage unit 17 is achieved with the use of ROM (Read Only Memory) that stores a program, an operation parameter, and the like to be used for the processing of the control unit 10, and RAM (Random Access Memory) that temporarily stores a parameter and the like varying as appropriate.

The configuration of the terminal device 1 according to the present embodiment has been specifically described above. It is to be noted that the components of the terminal device 1 are not limited to those of an example illustrated in FIG. 2, but the terminal device 1 may further include a variety of sensors such as a motion sensor, a biological sensor, an acceleration sensor, a gyro sensor, or a position sensor, for example. Further, although not illustrated in FIG. 1 and FIG. 2, the terminal device 1 may also be provided with an operational input unit such as a power switch or a volume control operation unit. Additionally, the terminal device 1 may be provided with an operational interface with the use of a touch sensor, a pressure sensor, a proximity sensor, or the like. Moreover, the terminal device 1 may further include a display unit to display an image that is an example of presentation information received from the server 2.

Further, at least a portion of the components of the terminal device 1 may be provided to an external device. For example, the audio input unit 12 and the camera 13 may be provided to an external device in the surrounding area, or a speaking voice and a captured image that are received from the external device in the surrounding area may be further used.

### <2-2. Configuration of Server 2>

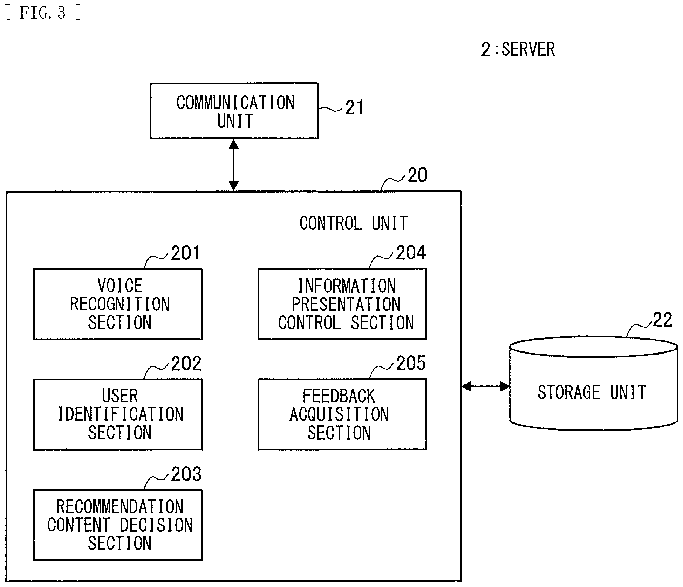

FIG. 3 is a block diagram illustrating an example of the configuration of the server 2 according to the present embodiment. As illustrated in FIG. 3, the server 2 (an example of the information processing device) includes a control unit 20, a communication unit 21, and a storage unit 22.

### (Control Unit 20)

The control unit 20 functions as an arithmetic processing device and a control device, and controls the overall operation of the server 2 in accordance with a variety of programs. The control unit 20 is achieved, for example, with the use of an electronic circuit such as CPU (Central Processing Unit) or a microprocessor. Further, the control unit 20 may include ROM (Read Only Memory) that stores a program, an operation parameter, and the like to be used, and RAM (Random Access Memory) that temporarily stores a parameter and the like varying as appropriate.

Further, the control unit 20 according to the present embodiment also functions as a voice recognition section 201, a user identification section 202, a recommendation content decision section 203, an information presentation control section 204, and a feedback acquisition section 205.

The voice recognition section 201 performs voice recognition for an audio signal (specifically, a user's speaking voice) that is transmitted from the terminal device 1, and textualizes the user's speaking voice. Further, the voice recognition section 201 performs semantic analysis for a textualized character string to recognize the contents of the spoken utterance.

The user identification section 202 identifies a user around the terminal device 1. Specifically, for example, the user identification section 202 may identify a user by performing voiceprint analysis for the audio signal (the user's speaking voice) that is transmitted from the terminal device 1 (speaker identification), or may identify a user by performing face recognition of a person appearing on a surrounding image captured by the terminal device 1. The storage unit 22 may store voiceprint information and facial information of a user.

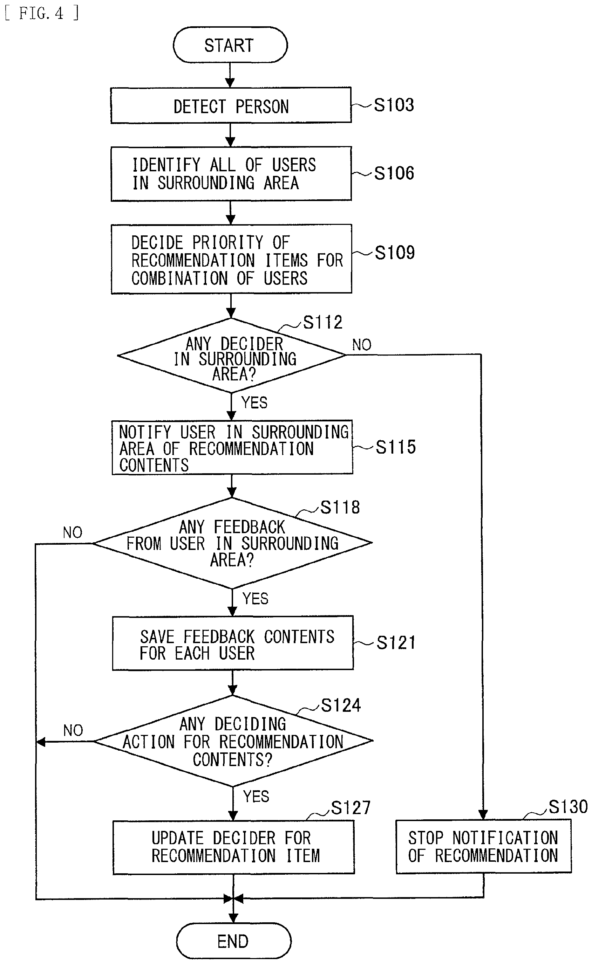

The recommendation content decision section 203 has a function of deciding the contents of information recommended to a user (recommendatory information). Taking into consideration who is a user who exists around the terminal device 1, and members of a group that includes the user, the recommendation content decision section 203 may decide recommendation contents for a plurality of users (the group that includes the users). The recommendatory information may be extracted from the storage unit 22, or may be acquired from another server through the network 3. A more specific method of deciding the recommendation contents is described later with reference to FIG. 4 to FIG. 7. It is to be noted that it has been here described that the recommendation contents for a plurality of users (that is, a group) are decided, but the present embodiment is not limited thereto. Needless to say, the recommendation contents for an individual user may also be decided. In this case, the recommendation content decision section 203 is able to decide the recommendation contents as appropriate on the basis of personal preference information and the like.

The information presentation control section 204 performs control to transmit the recommendatory information decided by the recommendation content decision section 203 to the terminal device 1 through the communication unit 21 to cause the recommendatory information to be presented to a user. It is to be noted that, in the present embodiment, presentation of the recommendation contents is mainly described, but the present embodiment is not limited thereto. The control unit 20 is also able to generate a response voice for a user's speech. A response sentence may be generated in accordance with a preset response sentence generation rule, or may be generated using a response sentence generation model constructed by machine learning. The information presentation control section 204 may also perform control to transmit a generated response voice to the terminal device 1 through the communication unit 21.

The feedback acquisition section 205 acquires a feedback (such as decision, agreement, or disagreement) to the recommendatory information proposed to a user from the user, and stores the feedback contents in the storage unit 22.

### (Communication Unit 21)

The communication unit 21 couples to the network 3 in a wired or wireless manner, and transmits and receives data to and from each terminal device 1 through the network 3. The communication unit 21 establishes communication coupling to the network 3, for example, in accordance with wired/wireless LAN (Local Area Network), Wi-Fi (Wireless Fidelity; registered trademark), or the like.

### (Storage Unit 22)

The storage unit 22 is achieved with the use of ROM that stores a program, an operation parameter, and the like used for the processing of the control unit 20, and RAM that temporarily stores a parameter and the like varying as appropriate. For example, the storage unit 22 according to the present embodiment stores the user information, the group information, the recommendatory information (content), the feedback contents, the response sentence generation rule, and the like.

The configuration of the server 2 according to the present embodiment has been specifically described above. It is to be noted that the components of the server 2 are not limited to those of an example illustrated in FIG. 3. For example, at least a portion of the components of the server 2 may be provided to an external device, or at least a portion of the respective functions of the control unit 20 may be provided in the terminal device 1 or an information processing terminal (a so-called edge server and the like) that is relatively closer to the terminal device 1 in communication distance. In this manner, distributing the respective components of the terminal device 1 as appropriate makes it possible to achieve improvement of real-time performance, reduction in processing burden, and assurance of security.

### <<3. Respective Working Examples>>

Next, the information processing system according to the present embodiment is specifically described with a plurality of working examples.

### <3-1. First Working Example>

First, information presentation processing according to a first working example is described with reference to FIG. 4. In the first working example, it is possible to raise a decision rate by performing recommendation only when a decider exists on the spot. FIG. 4 is a flowchart illustrating the information presentation processing according to the first working example.

As illustrated in FIG. 4, first, the server 2 analyzes a captured image transmitted from the terminal device 1 to detect that a person is around the terminal device 1 (Step S103), and identifies all of users in the surrounding area (Step S106). Specifically, the user identification section 202 performs face analysis for a person appearing on the captured image to identify the user.

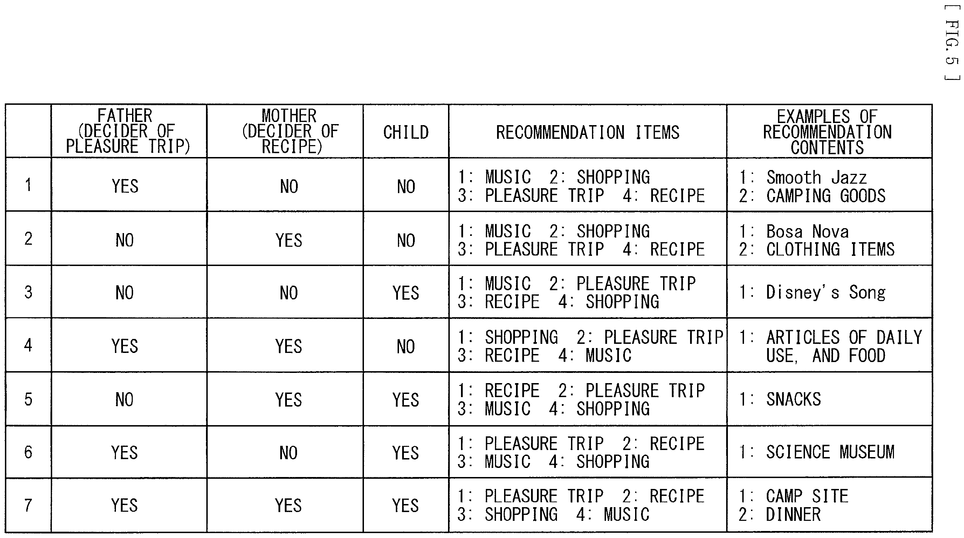

Next, the recommendation content decision section 203 of the server 2 decides priority of recommendation items for a combination of users who exist in the surrounding area (Step S109). Specifically, on the basis of a combination of users who exist in the surrounding area, the recommendation content decision section 203 determines a group to which one or more users who exist in the surrounding area belong, with reference to group information stored in the storage unit 22, and acquires the priority of each of the recommendation items according to a combination (of persons who exist) in the group. The priority of each of the recommendation items according to a combination (of persons who exist) in a group may be preset. Here, FIG. 5 illustrates an example of priority of each of recommendation items according to a combination of (persons who exist) in a group.

FIG. 5 illustrates a priority order of recommendation items that indicates whose existence prioritizes which recommendation items, for example, in a group including a father, a mother, and a child. Further, it is also defined who in the group is a decider for which recommendation items. It is to be noted that a decider may be preset by a user, or may be changed dynamically by the server 2 on the basis of a conversation history (including a conversation between users in addition to a conversation with an agent), a decision history, and the like (more specifically, a numerical value is changed indicating the "likelihood of a decider"). For example, in an example illustrated in FIG. 5, information recommendation for "recipe" takes the highest priority, and is followed by "pleasure trip", "music", and "shopping" in a case where a mother and a child exist. Further, information recommendation for "pleasure trip" takes the highest priority, and is followed by "recipe", "music", and "shopping" in a case where a father and a child exist. Priority of recommendatory information may also be changed dynamically by the server 2 as appropriate on the basis of a decider change, a conversation history, a decision history, and the like. For example, in a case where a mother and a child often talk about music, the server 2 puts higher priority on "music" in a combination of the mother and the child.

Further, contents of recommendation corresponding to each of the recommendation items may be updated as appropriate. The server 2 may acquire one or more of recommendation contents concerning, for example, "music" periodically (every week, this week's sales top 10, and the like) to perform updating.

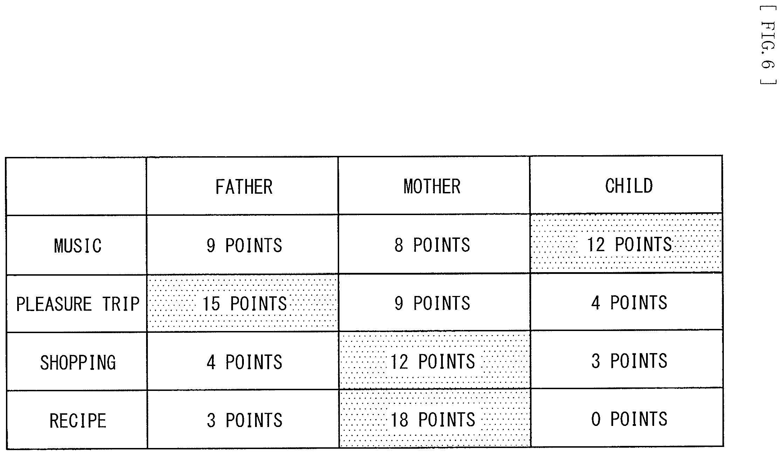

Next, the recommendation content decision section 203 determines whether or not a decider is around the terminal device 1 (Step S112). More specifically, on the basis of priority of the recommendation items according to a combination of users, the recommendation content decision section 203 regards, as a decider, a person who is the most likely to be a decider for the recommendation items having high priority, and determines whether or not the decider exists. Here, FIG. 6 illustrates an example of a management table of the likelihood of a decider. The management table may be included in group information, and stored in the storage unit 22.

As illustrated in FIG. 6, for example, a numerical value indicating the "likelihood of a decider" may be indicated as points, and a person having ten points or more may be regarded as a decider for that item (see highlighted portions illustrated in FIG. 6). The numerical value indicating the "likelihood of a decider" may be increased and decreased on the basis of a feedback indicating who is an actual decider of recommendation contents, which is acquired by the feedback acquisition section 205 of the server 2. A specific example of a deciding action is described later.

Next, in a case where a decider is in the surrounding area (Step S112/Yes), the information presentation control section 204 of the server 2 performs control to notify a user in the surrounding area of recommendation contents (Step S115). Specifically, the information presentation control section 204 performs control to transmit recommendatory information of recommendation items that have high priority, are decided in accordance with a combination of users on the spot, and have a decider to the terminal device 1 for presentation to a user.

Subsequently, in a case where there is a feedback to the presented recommendatory information from the user in the surrounding area (Step S118/Yes), the feedback acquisition section 205 saves feedback contents in the storage unit 22 for each user (Step S121). Specifically, the feedback acquisition section 205 saves the feedback contents indicating, for example, who speaks (answers) what, and who demonstrates what reaction. Further, the feedback acquisition section 205 is also able to acquire user preference information on the basis of the feedback contents. Hereinafter, examples are given for a case of determining that "there is a preference" and a case of determining that "there is no preference".

A case of determining that "there is a preference":
* An action of viewing or continuing to view the terminal device 1, a projection screen, or a display screen
* An action of coming closer to the terminal device 1, a projection screen, or a display screen
* An action of issuing an instruction to present detailed contents (for example, "Let me see the number 1" (in a case where a plurality of pieces of recommendatory information concerning a certain recommendation item is numbered and listed), "Let me hear it in detail", and the like)
* An action of issuing an instruction to allow for viewing and listening on another device (for example, "Send this to a smartphone", "Put it on TV", "Play it from a speaker in the kitchen", and the like)
* An action of instructing another application to register presentation contents (for example, "Register that event on the calendar", "Add foodstuffs of this recipe to the shopping list", and the like)
* An action of issuing an instruction to reproduce any recommended music or image. In addition, an action of refraining from stopping music or an image after the music or the image is once reproduced (in a case where the music or the image is viewed or listened to until the end)
* A case where positive impressions are given to presentation contents (for example, "It is good", "It seems interesting", "I like it", and the like)

A case of determining that "there is no preference":
* An action of refraining from viewing the terminal device 1, a projection screen, or a display screen
* An action of issuing an instruction to stop presentation or reproduction (for example, "Turn off the screen", "That's enough", "Be quiet", "Stop it", and the like)
* A case where negative impressions are given to presentation contents (for example, "Not this", "I don't like it much", and the like)

Next, the feedback acquisition section 205 determines whether or not there is a deciding action for the recommendation contents (the presentation contents) (Step S124). The deciding action refers to a reaction that prompts execution of recommended contents or decides the execution, and the following actions are, for example, given as examples.

Examples of the "deciding action":
* Instruction of "reproduction" of recommended video or music content (voice operation/GUI operation)
* Instruction of "reservation", "registration on the calendar", and "registration in favorites" of recommended pleasure trip information
* Instruction of "registration in favorites" and "printing" of a recommended recipe
* Instruction of "purchase" of recommended commercial goods (books, foodstuffs, clothing items, articles of daily use, and the like)
* Instruction of "transfer to a navigation device such as a smartphone" and "start of navigation" of recommended route information

Next, in a case where there is a deciding action for the recommendation contents (Step S124/Yes), the feedback acquisition section 205 updates a decider for the presented recommendation item (Step S127). Specifically, the feedback acquisition section 205 performs control to add a predetermined point to a numerical value of the "likelihood of a decider" for the recommendation item associated with the current decider. It is to be noted that the recommendation contents for the deciding action may be executed on the terminal device 1 side as appropriate, or may be executed on the server 2 side as appropriate.

In contrast, in a case where a decider is not in the surrounding area (Step S112/No), the server 2 issues no recommendation notification (Step S130).

The first working example has been specifically described above. It is to be noted that, in a case where a decider of the highest recommendation item does not exist, the recommendation content decision section 203 according to the present working example may confirm whether or not a decider of the recommendation item having the second highest priority exists in accordance with a combination of users in the surrounding area.

Further, in a case where a decider does not exist, recommendation contents is not presented before a final stage (a decision stage of "reservation", "payment", and the like), but may be browsed.

Additionally, presentation processing according to the present working example may be executed in a case of a large amount of recommendatory information (that is, in a case of a large amount of recommendatory information, it is possible to efficiently present recommendatory information having a decider and leading to an increase in the decision rate by giving priority to the recommendatory information).

Further, in the present working example, recommendatory information for an individual person may be presented in a case where a decider does not exist.

Moreover, it is also possible for one user to belong to a plurality of groups.

### <3-2. Second Working Example>

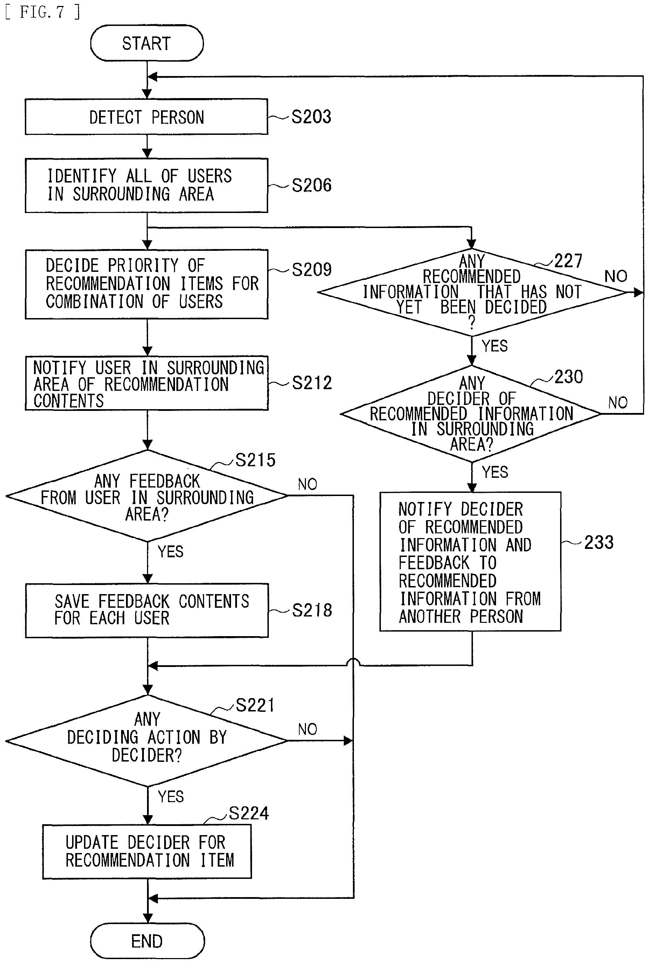

Next, a second working example is described with reference to FIG. 7. In the second working example, a notification of recommendation contents is issued even in a case where a decider is not on the spot. Thereafter, when the decider is discovered, notifications of the recommendation contents and a feedback from another user are issued. This makes it possible to provide a support to allow the decider to smoothly perform decision determination with reference to an opinion of the other user.

FIG. 7 is a flowchart illustrating the information presentation processing according to the present working example. As illustrated in FIG. 7, first, the server 2 analyzes a captured image transmitted from the terminal device 1 to detect that a person is around the terminal device 1 (Step S203), and identifies all of users in the surrounding area (Step S206). Specifically, the user identification section 202 performs face analysis for a person appearing on the captured image to identify the user.

Next, the recommendation content decision section 203 of the server 2 decides priority of recommendation items for a combination of users who exist in the surrounding area (Step S209).

Subsequently, the information presentation control section 204 of the server 2 performs control to notify a user in the surrounding area of recommendation contents (Step S212). A notification of only recommendatory information of the recommendation item having the highest priority may be issued, or notifications of respective pieces of recommendatory information of a predetermined number of top recommendation items may be notified.

Next, in a case where there is a feedback to the presented recommendatory information from the user in the surrounding area (Step S215/Yes), the feedback acquisition section 205 saves feedback contents in the storage unit 22 for each user (Step S218).

Subsequently, the feedback acquisition section 205 determines whether or not there is a deciding action performed by a decider for the recommendation contents (the presentation contents) (Step S221). Similarly to the first working example, with respect to the "decider", a user who is high in the "likelihood of a decider" in the recommended recommendation items is regarded as the decider. Further, a deciding action performed by a person other than the decider is not accepted.

Next, in a case where there is a deciding action performed by a decider for the recommendation contents (Step S221/Yes), the feedback acquisition section 205 updates a decider for the presented recommendation item (Step S224).

In a case where there is recommended information that has not yet been decided (Step S227/Yes), the recommendation content decision section 203 determines, separately from the processing of Step S209 to Step S218 described above, whether or not a decider of the recommended information is in the surrounding area (Step S230). In the present working example, recommendatory information is presented irrespective of the existence or nonexistence of a decider. A feedback from a person other than a reference decider is thus saved as described in Step S218 above, but a deciding action is not accepted. Therefore, in a case where there is no deciding action by a decider in spite of recommendation, the server 2 performs processing of recording a history as recommended information that has not yet been decided.

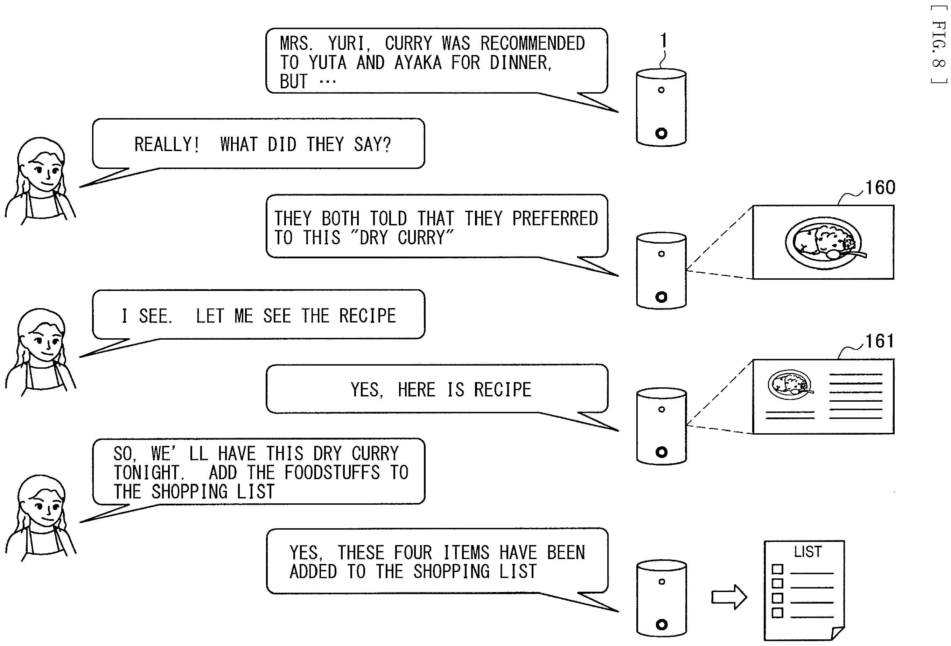

Subsequently, in a case where a decider of recommended information is in the surrounding area (Step S230/Yes), the information presentation control section 204 notifies the decider of the recommended information and a feedback from another person (Step S233). This allows the decider to immediately perform decision determination with reference to a reaction of another user. Here, FIG. 8 illustrates an example of a dialogue sequence of a user and the terminal device 1 in the present working example.

As illustrated in FIG. 8, in a case where, for example, a user "Mrs. Yuri" who is a decider of a recommended item "recipe" that has not yet been decided exists, the terminal device 1 issues a notification of recommendation contents (for example, projects an image 160 of dry curry as illustrated in FIG. 8) along with information recommendation made ("Curry was recommended for dinner, but ...") to other users (for example, children "Yuta" and "Ayaka") and a feedback ("They both told that they preferred to this dry curry").

Next, the terminal device 1 performs execution processing such as presenting the contents of a recipe (for example, projecting a recipe image 161 as illustrated in FIG. 8) in accordance with an instruction of the user "Mrs. Yuri", and adding foodstuffs presented in the recipe to the shopping list in accordance with a deciding action of "Add to the shopping list".

### <<4. Conclusion>>

As described above, the information processing system according to the embodiment of the present disclosure makes it possible to present recommendatory information for a plurality of users when a decider exists, and to raise a decision rate.

Specifically, according to the present embodiment, recommendatory information is less frequently presented in a situation in which a decider does not exist, which makes it possible to avoid recommending "undecidable contents desired to be decided" many times.

Further, according to the present embodiment, recommendatory information is less frequently presented in a situation in which a decider does not exist, which eliminates time and effort that a user who has once received recommendation recalls the recommendation by himself or herself again and tells the recommendation to a decider when the decider exists, or takes out recommendation contents saved by himself or herself to explain them to the decider.

Additionally, according to the present embodiment, it is possible to reduce probability that monetary costs such as "reservation of a pleasure trip" and "purchase of commercial goods" are generated in a situation in which a decider does not exist. This allows for reduction in risks even when the present system is used along with a child or an elderly person who has insufficient recognitional capacity.

Further, according to the present embodiment, making recommendation in consideration of a combination of users makes it possible to avoid recommending contents that another person has no interest in. Additionally, recommendation contents dependent on an individual person are less frequently exposed to the eyes of other users, making it possible to preserve privacy.

The preferred embodiment(s) of the present disclosure has/have been described above with reference to the accompanying drawings, whilst the present disclosure is not limited to the above examples. It is apparent that a person having ordinary skill in the art of the present disclosure may arrive at various alterations and modifications within the scope of the technical idea described in the appended claims, and it is understood that such alterations and modifications naturally fall within the technical scope of the present disclosure.

For example, it is also possible to make a computer program for causing hardware such as the CPU, the ROM, and the RAM built in the terminal device 1 or the server 2 to attain the function of the terminal device 1 or the server 2. In addition, there is also provided a computer-readable storage medium having the computer program stored therein.

Further, the effects described herein are merely illustrative and exemplary, and not limitative. That is, the technology according to the present disclosure may attain other effects that are apparent to those skilled in the art from the description herein, in addition to the above-described effects or in place of the above-described effects.

It is to be noted that the present technology may also be configured as below.
(1) An information processing device including
   a control unit that performs control to present recommendatory information of a recommendation item whose decider exists in a surrounding area among recommendation items of information to be recommended to a group to which one or more identified users who exist in the surrounding area belong.
(2) The information processing device according to (1), in which the control unit performs control not to present recommendatory information of a recommendation item whose decider does not exist in the surrounding area.
(3) The information processing device according to (1), in which, in a case where recommendatory information of a recommendation item corresponding to a decider is presented with no decider in the surrounding area, the control unit performs control to save a feedback to the recommendatory information from a user in the surrounding area.
(4) The information processing device according to (3), in which, in a case where there is recommended recommendatory information that has not yet been decided, the control unit performs control to present the recommended recommendatory information and the saved feedback to the recommendatory information in identifying a decider corresponding to the recommendatory information in the surrounding area.
(5) The information processing device according to any one of (1) to (4), in which the control unit decides priority of a recommendation item in accordance with a combination of a plurality of users who exists in the surrounding area.
(6) The information processing device according to (5), in which the control unit changes the priority of the recommendation item on the basis of a conversation history or a decision history.
(7) The information processing device according to (5) or (6), in which the control unit decides a recommendation item to be presented in accordance with the priority.
(8) The information processing device according to any one of (1) to (7), in which the control unit determines a decider in accordance with each user's likelihood of a decider.
(9) The information processing device according to (8), in which the likelihood of a decider is determined on the basis of a score calculated in accordance with a decision history.
(10) The information processing device according to any one of (1) to (9), in which the control unit performs control to perform decision processing only for a deciding action from a decider.
(11) An information processing method including
   performing, by a processor, control to present recommendatory information of a recommendation item whose decider exists in a surrounding area among recommendation items of information to be recommended to a group to which one or more identified users who exist in the surrounding area belong.
(12) A program for causing a computer to function as
   a control unit that performs control to present recommendatory information of a recommendation item whose decider exists in a surrounding area among recommendation items of information to be recommended to a group to which one or more identified users who exist in the surrounding area belong.

### Reference Signs List

1: Terminal device
2: Server
3: Network
10: Control unit
11: Communication unit
12: Audio input unit
13: Camera
14: Audio output unit
15: Light-emitting unit
16: Projecting unit
17: Storage unit
20: Control unit
21: Communication unit
22: Storage unit
201: Voice recognition section
202: User identification section
203: Recommendation content decision section
204: Information presentation control section
205: Feedback acquisition section

## Claims

1. An information processing device comprising
a control unit that performs control to present recommendatory information of a recommendation item whose decider exists in a surrounding area among recommendation items of information to be recommended to a group to which one or more identified users who exist in the surrounding area belong.

2. The information processing device according to claim 1, wherein the control unit performs control not to present recommendatory information of a recommendation item whose decider does not exist in the surrounding area.

3. The information processing device according to claim 1, wherein, in a case where recommendatory information of a recommendation item corresponding to a decider is presented with no decider in the surrounding area, the control unit performs control to save a feedback to the recommendatory information from a user in the surrounding area.

4. The information processing device according to claim 3, wherein, in a case where there is recommended recommendatory information that has not yet been decided, the control unit performs control to present the recommended recommendatory information and the saved feedback to the recommendatory information in identifying a decider corresponding to the recommendatory information in the surrounding area.

5. The information processing device according to claim 1, wherein the control unit decides priority of a recommendation item in accordance with a combination of a plurality of users who exists in the surrounding area.

6. The information processing device according to claim 5, wherein the control unit changes the priority of the recommendation item on a basis of a conversation history or a decision history.

7. The information processing device according to claim 5, wherein the control unit decides a recommendation item to be presented in accordance with the priority.

8. The information processing device according to claim 1, wherein the control unit determines a decider in accordance with each user's likelihood of a decider.

9. The information processing device according to claim 8, wherein the likelihood of a decider is determined on a basis of a score calculated in accordance with a decision history.

10. The information processing device according to claim 1, wherein the control unit performs control to perform decision processing only for a deciding action from a decider.

11. An information processing method comprising
performing, by a processor, control to present recommendatory information of a recommendation item whose decider exists in a surrounding area among recommendation items of information to be recommended to a group to which one or more identified users who exist in the surrounding area belong.

12. A program for causing a computer to function as
a control unit that performs control to present recommendatory information of a recommendation item whose decider exists in a surrounding area among recommendation items of information to be recommended to a group to which one or more identified users who exist in the surrounding area belong.
